# EUROPEAN PATENT SPECIFICATION

(11) **EP 2 278 835 B1**
(45) Date of publication and mention of the grant of the patent: **04.05.2016**
(21) Application number: 08783987.4
(22) Date of filing: 14.08.2008
(51) Int. Cl.: H04W 24/02, H04W 8/26, H04W 76/02, H04W 88/08

(54) **METHOD AND DEVICE FOR DEPLOYING ENODEBS**
VERFAHREN UND EINRICHTUNG ZUM EINSATZ VON ENODEBS
PROCÉDÉ ET DISPOSITIF DE DÉPLOIEMENT DE ENODEBS

(30) Priority: 04.05.2008 CN 200810094718
(43) Date of publication of application: 26.01.2011
(73) Proprietor: ZTE Corporation, Shenzhen, Guangdong 518057 (CN)
(72) Inventor: YE, Minya, Shenzhen Guangdong 518057 (CN); DING, Yanjing, Shenzhen Guangdong 518057 (CN); LIU, Lin, Shenzhen Guangdong 518057 (CN)
(74) Representative: Vogel, Andreas
(86) International application number: PCT/CN2008/071996
(87) International publication number: WO 2009/135364

(56) References cited:
- WO-A2-2008/042414
- CN-A- 101 150 838
- US-A1- 2007 213 060
- US-A1- 2008 102 896
- RAN3: "LS on LTE-cell and eNB-identification", 3GPP DRAFT; C1-080974, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. Jeju Island; 20080327, 27 March 2008 (2008-03-27), XP050028284, [retrieved on 2008-03-27]
- HUAWEI: "Introduction of S1 Update procedure", 3GPP DRAFT; R3-080747_CR 36.413 S1 UPDATE PROC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Shenzhen, China; 20080326, 26 March 2008 (2008-03-26), XP050163956, [retrieved on 2008-03-26]
- ERICSSON: "CGI and eNB ID coding and size", 3GPP DRAFT; R3-081381, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Kansas City, USA; 20080502, 2 May 2008 (2008-05-02), XP050164554, [retrieved on 2008-05-02]

## Description

### Field of the Invention

The present invention relates to the communication field, and especially, to a method and device for deploying Evolved Node B.

### Background Art

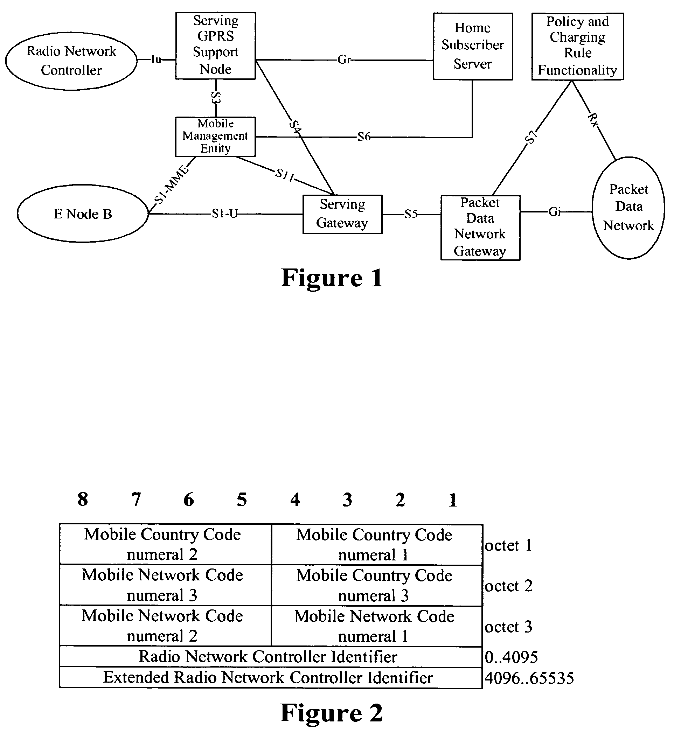

Generally, the project of a next generation mobile wireless network of the 3^{rd} Generation Partnership Project (3GPP for short) is called an Evolved Packet System (EPS for short), and Figure 1 is a schematic view of the architecture of the EPS, and as shown in Figure 1, the EPS comprises the following network elements:
an Evolved RAN (E-RAN for short) which is used to provide wireless resources for the access of a terminal, the E-RAN is used to provide a higher uplink/downlink rate, a lower transmission delay and a more reliable wireless transmission, wherein a network element included therein is an evolved node (e Node B for short);
a Home Subscriber Server (HSS for short) which is used to permanently store the subscribing data of a subscriber; and
a Packet Data Network (PDN for short) which is used to provide service to the subscriber.
an Evolved Packet Network (E-Packet Core for short) which is used to lower delay and access more wireless access systems. The E-Packet Core comprises the following network elements:
   a Mobility Management Entity (MME for short): it is a control plane functional entity, and is used to temporarily store subscriber data, manage and store a User Equipment (UE for short) context (such as a UE identifier, a mobility management state and user security parameters, etc.), to distribute temporary identifier for a subscriber, process all non-access layer messages between the MME and a UE, to trigger paging at the EPS (Evolved Packet System), and authenticate the UE when the UE resides in its tracking area or network.
   a Serving Gateway (Serving GW for short): it is a user plane entity and an anchor point of the user plane in a 3GPP system, and one user can only have one Serving GW at a certain moment. The Serving GW is used to process user plane data routing, terminate the downlink data of a UE in an idle state, manage and store SAE bearer context (such as IP bearer service parameters and network internal routing information) of the UE.
   a Packet Data Network Gateway (PDN GW for short): it is a mobility anchor point of 3GPP and non-3GPP access systems, and a UE can access plurality of PDN GWs at the same time. It is in charge of the access of a UE to the gateway of a PDN and assigning a subscriber IP address.
   a Policy and Charging Rule Functionality (PCRF for short): it is used to generate a Quality of Service (QoS for short) rule and a charging rule which control the data delivery of a subscriber according to service information, subscribing information of a subscriber and configuration information of the service provider, and to control the establishment and release of a bearer in the access network.

In the physical layer, the Serving GW and the PDN GW can be integrated together.

As an EPS network is a full IP network, it is required that each node in the network should have a globally unique node identifier, so that this node can communicate with other network nodes normally. In the relevant technology, there exists a two-layer network element structure in a wireless network corresponding to 3G: a Radio Network Controller (RNC for short) and a Node B, the deployment of the RNC is not full IP, and thus there are comparatively few identifiers for the RNC, and the structure of a Global RNC-ID (Global Radio Network Controller Identifier) is shown in Figure 2, wherein three octets, Mobile Country Code (MCC for short) occupying three octets and Mobile Network Code (MNC for short) occupying three octets are shown.

It can be seen from Figure 2 that the RNC originally can support at most 65535 e Nodes B. However, the current EPS network is a full IP network, and the two-layer structure is cancelled on the wireless network side, that is, the original Node B and the RNC are combined as a one-layer network structure which only has the e Node B and does not have the RNC. Since the number of the e Nodes B is much larger than the RNC, the originally defined 65535 e Nodes B of the whole network cannot meet the need of deploying the e Nodes B in the EPS network.

Document RAN3:"LS on LTE-cell and eNB-identification", 3GPP DRAFT; c1080974,(3GPP) FRANCE, 27 March 2008, is a liaison statement of RAN 3 to inform RAN2 and SA2 about LTE cell & and eNB identifiers and their usagers thereby mentioning the transmission of global LTE cell identification information to the MME during S1 connection setup.

### Summary of the Invention

According to one aspect of the present invention, a method for deploying evolved nodes is provided, and the method comprises: a MME acquires a connection establishment request from an e Node B, wherein the connection establishment request carries a global identifier of the e Node B; the MME acquires the global identifier, and searches for corresponding e Node B information according to the global identifier, and if the corresponding e Node B information cannot be found, the MME deploys the e Node B.

According to another aspect of the present invention, a device for deploying e Node B is provided, which is located on the MME side, and the deploying device comprises: an acquiring module, configured to acquire a connection establishment request from an e Node B, wherein the connection establishment request carries a global identifier of the e Node B; a searching module, configured to acquire the global identification, and search for corresponding e Node B information based on the global identifier; and a deploying module, configured to deploy the e Node B if the searching module cannot find the corresponding e Node B information.

By means of at least one technical solution above of the present invention, the MME in a mobile communication packet domain evolved system can deploy e Node Bs directly, which increases the number of e Node Bs in the mobile communication packet domain evolved system, and satisfies the demand of the mobile communication packet domain evolved system on e Node Bs.

### Brief Description of the Accompanying Drawings

The accompanying drawings are used to provide further understanding of the present invention and constitute a part of the Description. The accompanying drawings of the present invention are used to explain the present invention together with the embodiment of the present invention and shall not be construed as limitations on the same. In the accompanying drawings:
Figure 1 is a structural schematic view of the evolution of a system architecture according to the related art;
Figure 2 is a structural schematic view of the identifier of a global radio network controller according to the related art;
Figure 3 is a flow chart of the method for deploying e Node B according to the method embodiments of the present invention;
Figure 4 is a flow chart of the detailed processing of the method for deploying e Node B according to the method embodiments of the present invention; and
Figure 5 is a block diagram of the structure of the device for deploying e Node B according to the method embodiments of the present invention.

### Detailed Description of the Invention

The present invention will be detailed hereinafter in conjunction with the accompanying drawings.

### Method embodiment

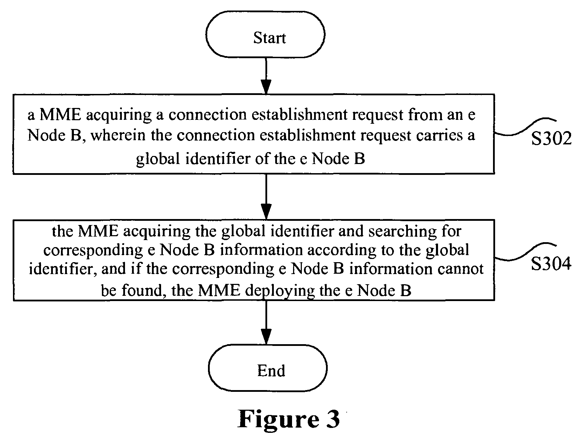

According to the embodiment of the present invention, a method for deploying e Node B is provided, and Figure 3 is a flow chart of the method for deploying e Node Bs according to the embodiments of the present invention, as shown in Figure 3, the method comprises the following steps:
S302, the MME acquires a connection establishment request from an e Node B, wherein the connection establishment request carries a global identifier of the e Node B; herein the global identifier comprises:
   Mobile Country Code (MCC) information of the e Node B, Mobile Network Code (MNC) information of the e Node B, and identification information of the e Node B; wherein the value range of the identification information of the e Node B should be larger than 0-65535, a recommended range is 0-4294967295 but not limited to this.
S304, the MME acquires the global identifier from the connection establishment request, and searches for corresponding e Node B information according to the global identifier, and if the corresponding e Node B information cannot be found, the MME deploys the e Node B. Then the MME preferably sends to the e Node B a connection establishment request response to inform the e Node B that access to a network has been successfully deployed.

By the technical solution provided by the embodiment of the present invention, the MME in the EPS system can deploy the e Node B directly according to the global identifier of the e Node B carried in a relevant message, which increases the number of e Node Bs in the EPS system, and satisfies the demand of the EPS system network on e Node Bs.

Preferably, in S304, the operation of deploying the e Node B is specifically as follows: the MME adds the e Node B to an e Node B deployment list and creates context information for storing relevant information of the e Node B; wherein the relevant information of the e Node B comprises: the global identifier of the e Node B, the e Node B deployment list, the name or identifier of the e Node B, and the security information of the e Node B.

On the other hand, in the above method, if a corresponding e Node B is found, the MME updates the network element level information of the e Node B, and preferably, the MME sends to the e Node B a connection establishment request response to inform the e Node B that the update is successful.

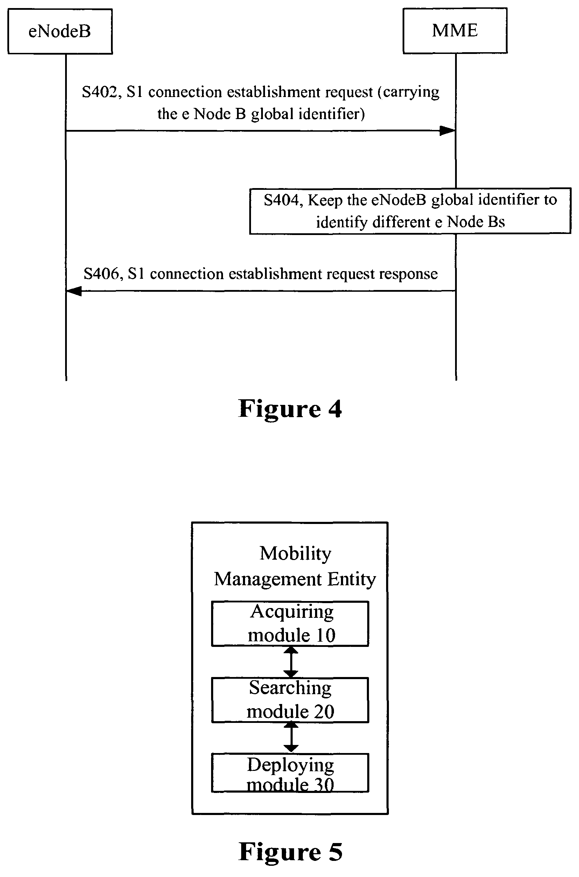

Hereinafter the present invention will be described by the following example: the realization of the method according to the embodiment of the present invention in an Evolved Packed System (EPS) of mobile communication comprising the Mobility Management Entity (MME) and the Evolved Node B (e Node B). Figure 4 is a flow chart of the detailed processing of the method for deploying e Node Bs according to the method embodiments of the present invention, as shown in Figure 4, the method comprises the following steps:
S402, in the following two situations, the e Node B sends the connection establishment request (which can be called S 1 connection establishment request) to the MME via an interface S 1 between the e Node B and the MME: when the e Node B is powered on and a bottom link has been successfully established, or when the e Node B needs to update its own relevant information.

The connection establishment request carries the global identifier of the e Node B, and the format of the global identifier comprises: one 12-bit MCC and 12-bit MNC, and one 4-byte e Node B ID, wherein the value range of the e Node B ID is 0-0xFFFFFFFF (4294967295), and each e Node B corresponds to one unique global identifier.

S404, after receiving the global identifier, the MME preferably stores the same locally, and if the MME finds the corresponding e Node B information, that is, it is found that a network element stores the network element level information of the e Node B corresponding to the global identifier, it is regarded that the e Node B has registered at the MME, and the connection establishment request sent by the e Node B initiates an update process which aims at updating relevant network element level information of the e Node B, then the MME updates the network element level information relevant to the e Node B, wherein the network element level information can comprise a tracking area list (that is, the above mentioned e Node B list) supported by the e Node B, the name information of the e Node B, and etc.

On the other hand, if the MME has not found the corresponding e Node B information according to the global identifier carried in the message, that is, it does not find that the network element stores the network element level information of the e Node B corresponding to the global identifier, it is regarded that this is a new e Node B, and the connection establishment request sent by the e Node B initiates a process of joining the MME, the MME adds the e Node B to the e Node B list deployed in its serving area and creates new context information for the e Node to store the relevant information of the e Node B, wherein the relevant information comprises the global identifier of the e Node B, the tracking area list of the e Node B, the name of the e Node B, and the security information of the e Node B.

S406, the MME sends the connection establishment request response to the e Node B, in the case of an update process, the e Node B can obtain relevant information of successful update according to the connection establishment request response; in the case of a process that a new e Node B joins the MME, the e Node B can know according to the connection establishment request response that it has joined in the EPS system.

According to the above implementation steps, the EPS system directly deploys the e Node B, and adds the number of the e Node Bs in the EPS system and satisfies the demand of the EPS system network on the e Node Bs.

### Device embodiment

According to the embodiment of the present invention, a device for deploying e Node B is further provided, and the device is located on the MME side, Figure 5 is a block diagram of its structure, and as shown in Figure 5, it mainly comprises:
an acquiring module **10,** configured to acquire the connection establishment request sent from the e Node B, wherein the connection establishment request carries a global identifier of the e Node B;
a searching module **20** connected to the acquiring module **10** and configured to acquire the global identifier, and search for corresponding e Node B information according to the global identifier; and
a deploying module **30,** configured to deploy the e Node B if the searching module **20** cannot find the corresponding e Node B information.

Preferably, the present invention further comprises a responding module (not shown in the figure) configured to send a connection establishment request response to the e Node B and inform the e Node B that joining the network has been successfully deployed. This module can be connected to the deploying module **30.**

Preferably, the deploying module **30** can specifically comprise an adding module (not shown in the figure) and a storing module (not shown in the figure).

Wherein, the adding module is configured to add the e Node B to a e Node B deployment list and create context information for storing relevant information of the e Node B; the storing module is configured to store the relevant information of the e Node B, and the relevant information comprises: the global identifier of the e Node B, the e Node B deployment list, the name of the e Node B, and security information of the e Node B, and this module can be connected to the adding module.

Preferably, the device further comprises an updating module (not shown in the figure) configured to update the network element level information of the e Node B if the searching module **20** finds a corresponding e Node B, and this module can be connected to the searching module **20** and the above responding module, and in this case, the responding module is further configured to send to the e Node B a connection establishment request response informing the e Node B that the update is successful.

By the device for deploying e Node Bs provided by the embodiment of the present invention, the MME in the EPS system deploys the e Node B directly according to the global identifier of the e Node B carried in a relevant message, which increases the number of e Node Bs in the EPS system, and satisfies the demand of the EPS system on e Node Bs.

As discussed above, with the method and/or device for deploying e Node Bs provided by the present invention, the value range of the e Node B ID is extended to 0-0xFFFFFFFF (4294967295), and in the network of one service provider, the number of the e Node B that can be deployed can be 4294967296 at most, and the MME in the EPS system directly deploys the e Node B, which increases the number of e Node B in the EPS system, and satisfies the demand of the EPS system on e Node Bs.

Described above are just preferable embodiments of the present invention and do not intend to restrict the present invention. For one skilled in the art, various modifications and variations can be made to the present invention. Any modifications, equivalent substitutions, improvements of the present invention should all be contained within the scope of protection of the present invention as defined by the appended claims.

## Claims

1. A method for deploying Evolved Node B, e Node B comprising:
a Mobility Management Entity, MME, acquiring a connection establishment request (S1, S402) from an Evolved Node B, e Node B, wherein the connection establishment request (S1, S402) carries a global identifier of the Evolved Node B, e Node B;
the Mobility Management Entity, MME, acquiring the global identifier, and searching for corresponding e Node B information according to the global identifier, and if the corresponding e Node B information cannot be found, deploying the Evolved Node B, e Node B.

2. The method according to claim 1, **characterized in that** the method further comprises:
the Mobility Management Entity MME, sending to the Evolved Node B, e Node B, a connection establishment request response (S406) to inform the Evolved Node B, e Node B, that the deployment of accessing a network is successful.

3. The method according to claim 1 or 2, **characterized in that** the global identifier comprises: Mobile Country Code information, MCC, of the e Node B, Mobile Network Code information; MNC, of the Evolved Node B, e Node B, and identifier information of the Evolved Node B,e Node B.

4. The method according to claim 3, **characterized in that** the value range of the identifier information of the Evolved Node B, e Node B, is larger than 0-65535.

5. The method according to claim 3, **characterized in that** the value range of the identifier information of the Evolved Node B, e Node B, is 0-4294967295.

6. The method according to claim 1 or 2, **characterized in that** the operation of deploying the Evolved Node B, e Node B, is specifically as follows:
the Mobility Management Entity, MME, adding the Evolved Node B, e Node B, to an e Node B deployment list and creating context information for storing relevant information of the Evolved Node B, e Node B,
wherein the relevant information of the Evolved Node B, e Node B, comprises: the global identifier of the Evolved Node B, e Node B, the e Node B deployment list, the name of the Evolved Node B, e Node B, and security information of the Evolved Node B, e Node B.

7. The method according to claim 1 or 2, **characterized in that** the method further comprises:
if a corresponding Evolved Node B, e Node B, is found, the Mobility Management Entity, MME, updating network element level information of the Evolved Node B, e Node B.

8. The method according to claim 7, **characterized in that** the method further comprises:
the Mobility Management Entity, MME, sending to the Evolved Node B, e Node B, a connection establishment request response (S406) to inform the Evolved Node B, e Node B, that the update is successful.

9. A device, located on a Mobility Management Entity, MME for deploying Evolued Node B, e Node B, the device comprising:
an acquiring module (10), configured to acquire a connection establishment request (S1, S402) from an Evolved Node B, e Node B, wherein the connection establishment request (S1, S402) carries a global identifier of the Evolved Node B, e Node B,
a searching module (20), configured to acquire the global identifier, and search for corresponding e Node B information according to the global identifier; and
a deploying module (30), configured to deploy the Evolved Node B, e Node B if the searching module cannot find the corresponding e Node B information.

10. The device according to claim 9, **characterized in that** the device further comprises:
a responding module, configured to send a connection establishment request response to the Evolved Node B, (e Node B, to inform the Evolved Node B, e Node B that the deployment of accessing a network is successful.

11. The device according to claim 9 or 10, **characterized in that** the deploying module comprises:
an adding module, configured to add the Evolved Node B, e Node B, to a e Node B deployment list and create context information for storing relevant information of the Evolved Node B, e Node B,
a storing module, configured to store the relevant information of the Evolved Node B, Node B, wherein the relevant information comprises: the global identifier of the Evolved Node B, e Node B, the e Node B deployment list, the name of the Evolved Node B, e Node B, and security information of the Evolved Node B, e Node B,

12. The device according to claim 9 or 10, **characterized in that** the device further comprises an updating module, configured to update network element level information of the Evolved Node B, e Node B, if the searching module finds a corresponding Evolved Node B, e Node B.

## Patentansprüche

1. Verfahren zum Einrichten des Evolved Node B (weiterentwickelten Knotens B), e Node B, umfassend:
eine Mobility Management Entity (Mobilitätsverwaltungsentität), MME, die eine Verbindungsherstellungsanforderung (S1, S402) von einem Evolved Node B, e Node B, erfasst, wobei die Verbindungsherstellungsanforderung (S1, S402) eine globale Kennzeichnung des Evolved Node B, e Node B trägt;
die Mobility Management Entity, MME, welche die globale Kennzeichnung erfasst und nach entsprechenden e Node B-Informationen gemäß der globalen Kennzeichnung sucht, und wenn die entsprechenden e Node B-Informationen nicht gefunden werden können, Einrichten des Evolved Node B, e Node B.

2. Verfahren nach Anspruch 1,
**dadurch gekennzeichnet,**
**dass** das Verfahren des Weiteren umfasst:
die Mobility Management Entity, MME, welche eine Antwort auf die Verbindungsherstellungsanforderung (S406) an den Evolved Node B, e Node B, sendet, um den Evolved Node B, e Node B, darüber zu informieren, dass die Einrichtung zum Zugreifen auf ein Netzwerk erfolgreich ist.

3. Verfahren nach Anspruch 1 oder 2,
**dadurch gekennzeichnet,**
**dass** die globale Kennzeichnung umfasst:
Mobile Country Code-Informationen (Mobilländercodeinformationen), MCC, des e Node B, Mobile Network Code-Informationen (Mobilnetzwerkcodeinformationen), MNC, des Evolved Node B, e Node B, und Kennzeichnungsinformationen des Evolved Node B, e Node B.

4. Verfahren nach Anspruch 3,
**dadurch gekennzeichnet,**
**dass** der Wertebereich der Kennzeichnungsinformationen des Evolved Node B, e Node B, größer als 0-65535 ist.

5. Verfahren nach Anspruch 3,
**dadurch gekennzeichnet,**
**dass** der Wertebereich der Kennzeichnungsinformationen des Evolved Node B, e Node B, 0-4294967295 ist.

6. Verfahren nach Anspruch 1 oder 2,
**dadurch gekennzeichnet,**
**dass** das Betreiben des Einrichtens des Evolved Node B, e Node B, speziell wie folgt abläuft:
die Mobility Management Entity, MME, fügt den Evolved Node B, e Node B, zu einer Evolved Node B-Einrichtungsliste hinzu und erzeugt Kontextinformationen zum Speichern relevanter Informationen des Evolved Node B, e Node B;
wobei die relevanten Informationen des Evolved Node B, e Node B, umfassen:
die globale Kennzeichnung des Evolved Node B, e Node B, die e Node B-Einrichtungsliste, den Namen des Evolved Node B, e Node B, und Sicherheitsinformationen des Evolved Node B, e Node B.

7. Verfahren nach Anspruch 1 oder 2,
**dadurch gekennzeichnet,**
**dass** das Verfahren des Weiteren umfasst:
wenn ein entsprechender Evolved Node B, e Node B, gefunden wird, aktualisiert die Mobility Management Entity, MME, die Informationen der Netzwerkelementebene des Evolved Node B, e Node B.

8. Verfahren nach Anspruch 7,
**dadurch gekennzeichnet,**
**dass** das Verfahren des Weiteren umfasst:
die Mobility Management Entity, MME, sendet eine Antwort auf die Verbindungsherstellungsanforderung (S406) an den Evolved Node B, e Node B, um den Evolved Node B, e Node B, darüber zu informieren, dass die Aktualisierung erfolgreich ist.

9. Vorrichtung, die sich in einer Mobility Management Entity, MME, zum Einrichten des Evolved Node B, e Node B, befindet, wobei die Vorrichtung Folgendes umfasst:
ein Erfassungsmodul (10), das dazu ausgestaltet ist, eine Verbindungsherstellungsanforderung (S1, S402) von einem Evolved Node B, e Node B, zu erfassen, wobei die Verbindungsherstellungsanforderung (S1, S402) eine globale Kennzeichnung des Evolved Node B, e Node B trägt;
ein Suchmodul (20), das dazu ausgestaltet ist, die globale Kennzeichnung zu erfassen und nach entsprechenden e Node B-Informationen gemäß der globalen Kennzeichnung zu suchen; und
ein Einrichtungsmodul (30), das dazu ausgestaltet ist, den Evolved Node B, e Node B, einzurichten, wenn das Suchmodul die entsprechenden e Node B-Informationen nicht finden kann.

10. Vorrichtung nach Anspruch 9,
**dadurch gekennzeichnet,**
**dass** die Vorrichtung des Weiteren umfasst:
ein Antwortmodul, das dazu ausgestaltet ist, eine Antwort auf die Verbindungsherstellungsanforderung an den Evolved Node B, e Node B, zu senden, um den Evolved Node B, e Node B, darüber zu informieren, dass die Einrichtung zum Zugreifen auf ein Netzwerk erfolgreich ist.

11. Vorrichtung nach Anspruch 9 oder 10,
**dadurch gekennzeichnet,**
**dass** das Einrichtungsmodul umfasst:
ein Hinzufügemodul, das dazu ausgestaltet ist, den Evolved Node B, e Node B, zu einer e Node B-Einrichtungsliste hinzuzufügen und Kontextinformationen zum Speichern relevanter Informationen des Evolved Node B, e Node B, zu erzeugen;
ein Speichermodul, das dazu ausgestaltet ist, die relevanten Informationen des Evolved Node B, e Node B, zu speichern, wobei die relevanten Informationen umfassen: die globale Kennzeichnung des Evolved Node B, e Node B, die e Node B-Einrichtungsliste, den Namen des Evolved Node B, e Node B, und Sicherheitsinformationen des Evolved Node B, e Node B.

12. Vorrichtung nach Anspruch 9 oder 10,
**dadurch gekennzeichnet,**
**dass** die Vorrichtung des Weiteren ein Aktualisierungsmodul umfasst, das dazu ausgestaltet ist, Informationen der Netzwerkelementebene des Evolved Node B, e Node B, zu aktualisieren, wenn das Suchmodul einen entsprechenden Evolved Node B, e Node B, findet.

## Revendications

1. Procédé de déploiement de noeud B évolué, eNodeB, comprenant :
une entité de gestion de mobilité, MME, effectuant l'acquisition d'une demande d'établissement de liaison (S1, S402) provenant d'un noeud B évolué, eNodeB, dans lequel la demande d'établissement de liaison (S1, S402) porte un identifiant global du noeud B évolué, eNodeB ;
l'entité de gestion de mobilité, MME, effectuant l'acquisition de l'identifiant global et la recherche d'informations d'eNodeB correspondantes en fonction de l'identifiant global et, si les informations d'eNodeB correspondantes sont introuvables, le déploiement du noeud B évolué, eNodeB.

2. Procédé selon la revendication 1,
**caractérisé en ce que**
le procédé comprend en outre :
l'entité de gestion de mobilité, MME, effectue l'envoi au noeud B évolué, eNodeB, d'une réponse à la demande d'établissement de liaison (S406) pour informer le noeud B évolué, eNodeB, que le déploiement de l'accès à un réseau est réussi.

3. Procédé selon la revendication 1 ou 2,
**caractérisé en ce que**
l'identifiant global comprend : des informations de code de pays de mobile, MCC, du noeud B évolué, eNodeB, des informations de code de réseau de mobile, MNC, du noeud B évolué, eNodeB, et des informations d'identifiant du noeud B évolué, eNodeB.

4. Procédé selon la revendication 3,
**caractérisé en ce que**
la plage de valeurs des informations d'identifiant du noeud B évolué, eNodeB, est supérieure à 0-65535.

5. Procédé selon la revendication 3,
**caractérisé en ce que**
la plage de valeurs des informations d'identifiant du noeud B évolué, eNodeB, est 0-4294967295.

6. Procédé selon la revendication 1 ou 2,
**caractérisé en ce que**
l'opération de déploiement du noeud B évolué, eNodeB, se déroule spécifiquement comme suit :
l'entité de gestion de mobilité, MME, effectue l'ajout du noeud B évolué, eNodeB, à une liste de déploiement d'eNodeB, et la création d'informations de contexte pour mémoriser des informations pertinentes du noeud B évolué, eNodeB ;
dans lequel les informations pertinentes du noeud B évolué, eNodeB, comprennent : l'identifiant global du noeud B évolué, eNodeB, la liste de déploiement d'eNodeB, le nom du noeud B évolué, eNodeB, et des informations de sécurité du noeud B évolué, eNodeB.

7. Procédé selon la revendication 1 ou 2,
**caractérisé en ce que**
le procédé comprend en outre :
si un noeud B évolué, eNodeB, correspondant est trouvé, l'entité de gestion de mobilité, MME, effectue la mise à jour d'informations de niveau d'éléments de réseau du noeud B évolué, eNodeB.

8. Procédé selon la revendication 7,
**caractérisé en ce que**
le procédé comprend en outre :
l'entité de gestion de mobilité, MME, effectue l'envoi, au noeud B évolué, eNodeB, d'une réponse à la demande d'établissement de liaison (S406) pour informer le noeud B évolué, eNodeB, que la mise à jour est réussie.

9. Dispositif situé sur une entité de gestion de mobilité, MME, pour déployer un noeud B évolué, eNodeB, le dispositif comprenant :
un module d'acquisition (10), configuré pour effectuer l'acquisition d'une demande d'établissement de liaison (S1, S402) provenant d'un noeud B évolué, eNodeB, dans lequel la demande d'établissement de liaison (S1, S402) porte un identifiant global du noeud B évolué, eNodeB ;
un module de recherche (20), configuré pour effectuer l'acquisition de l'identifiant global et la recherche d'informations d'eNodeB correspondantes en fonction de l'identifiant global ; et
un module de déploiement (30), configuré pour effectuer le déploiement du noeud B évolué, eNodeB, si le module de recherche ne peut pas trouver les informations d'eNodeB correspondantes.

10. Dispositif selon la revendication 9,
**caractérisé en ce que**
le dispositif comprend en outre :
un module de réponse, configuré pour effectuer l'envoi d'une réponse à la demande d'établissement de liaison au noeud B évolué, eNodeB, pour informer le noeud B évolué, eNodeB, que le déploiement de l'accès à un réseau est réussi.

11. Dispositif selon la revendication 9 ou 10,
**caractérisé en ce que**
le module de déploiement comprend :
un module d'ajout, configuré pour effectuer l'ajout du noeud B évolué, eNodeB, à une liste de déploiement d'eNodeB, et la création d'informations de contexte pour mémoriser des informations pertinentes du noeud B évolué, eNodeB ;
un module de mémorisation, configuré pour effectuer la mémorisation d'informations pertinentes au noeud B évolué, eNodeB, dans lequel les informations pertinentes comprennent : l'identifiant global du noeud B évolué, eNodeB, la liste de déploiement d'eNodeB, le nom du noeud B évolué, eNodeB, et des informations de sécurité du noeud B évolué, eNodeB.

12. Dispositif selon la revendication 9 ou 10,
**caractérisé en ce que**
le dispositif comprend en outre un module de mise à jour, configuré pour effectuer la mise à jour d'informations de niveau d'éléments de réseau du noeud B évolué, eNodeB, si le module de recherche trouve un noeud B évolué, eNodeB, correspondant.
